# EUROPÄISCHE PATENTSCHRIFT

(11) **EP 2 391 515 B1**
(45) Veröffentlichungstag und Bekanntmachung des Hinweises auf die Patenterteilung: **03.04.2013**
(21) Anmeldenummer: 10701344.3
(22) Anmeldetag: 18.01.2010
(51) Int. Cl.: B60C 11/24

(54) **VORRICHTUNG UND VERFAHREN ZUM MESSEN DER PROFILTIEFE EINES KRAFTFAHRZEUGREIFENS**
DEVICE AND METHOD FOR MEASURING THE TREAD DEPTH OF A MOTOR VEHICLE TIRE
DISPOSITIF ET PROCÉDÉ POUR MESURER LA PROFONDEUR DE LA SCULPTURE D'UN PNEU DE VÉHICULE À MOTEUR

(30) Priorität: 28.01.2009 DE 102009006458
(43) Veröffentlichungstag der Anmeldung: 07.12.2011
(73) Patentinhaber: Continental Automotive GmbH, 30165 Hannover (DE)
(72) Erfinder: BIGOT, Franck, 93073 Neutraubling (DE); HAAS, Thomas, 93093 Donaustauf (DE); HILLENMAYER, Franz, 93133 Burglengenfeld (DE)
(86) Internationale Anmeldenummer: PCT/EP2010/050540
(87) Internationale Veröffentlichungsnummer: WO 2010/086250

(56) Entgegenhaltungen:
- EP-A- 1 356 957
- EP-A- 1 759 891
- WO-A-2006/098714
- WO-A-2009/095113
- JP-A- 2003 065 871
- US-A- 5 749 984

## Beschreibung

Die Erfindung betrifft eine Vorrichtung und ein Verfahren zum Messen der Profiltiefe eines Kraftfahrzeugreifens.

In Deutschland und den meisten europäischen Ländern ist die Mindestreifenprofiltiefe im mittleren Bereich der Lauffläche (Hauptprofilrillen) von 1,6 mm gesetzlich vorgeschrieben. Die Reifen müssen um den ganzen Umfang der Lauffläche mit Profilrillen versehen sein. Nähert sich die Profiltiefe der gesetzlich vorgeschriebenen Mindestprofiltiefe, erhöht sich der Bremsweg insbesondere bei Nässe. Bei regennassen Straßen kann es bei geringer Profiltiefe auch bei geringen Geschwindigkeiten zu Aquaplaning kommen.

Um optisch zu erkennen, wann ein Reifen eine Profiltiefe von 1, 6 mm aufweist, ist es bisher bekannt, an mehreren Stellen in der Reifenschulter in den Hauptprofilrillen über den Umfang des Reifens verteilt Querstege in den Längsprofilen anzuordnen. Diese Querstege werden auch als TWI (Tread Wear Indicator) bezeichnet. Es handelt sich dabei um stegähnliche Erhebungen in den Längsrillen, die bei einer Abnutzung des Reifens bis auf die 1,6 mm Restprofiltiefe sichtbar werden. Allerdings ist dies nur von außen und bei Fahrzeug optisch zu erkennen.

Aus der Offenlegungsschrift DE 101 57 263 A1 ist ein Verfahren zur Ermittlung der Profiltiefe oder des Laufstreifenabriebes eines Reifens während des Betriebes des Fahrzeugs bekannt. Im Laufstreifen (auch als Lauffläche bezeichnet) sind in unterschiedlichen Positionen magnetisch leitfähige Elemente angeordnet, die in einem außerhalb des Laufstreifens positionierten Sensor auf elektromagnetische oder elektrodynamische Weise elektrische Signale erzeugen, die einer elektronischen Auswerteeinheit zugeführt werden, welche in Abhängigkeit von der Art der Signale den aktuellen Abriebzustand des Laufstreifens ermittelt und diesen zur Anzeige bringt, zumindest beim Erreichen eines dem höchstzulässigen Abrieb angepassten Schwellwertes.

Zum Messen der Profiltiefe während des Betriebs muss der Sensor im Allgemeinen sehr nahe an der Lauffläche angeordnet sein, um noch zuverlässige Werte zu liefern. Beispielsweise beim Radwechsel stören derartige, nahe der Lauffläche angebrachte Sensoren.

Aus der gattungsgemäßen WO 2006098714A1 ist ein Verfahren zum Ableiten verschiedener Reifenzustandsparameter bekannt. Die Daten, die entsprechende Sensoren an den Reifen bereitstellen, werden ähnlich wie bei einem Elektrokardiogramm eines Patienten ausgewertet.

Die EP 1759891A1 beschreibt ein System zum Erkennen einer Abnutzung eines Reifens, das eine im Reifen angeordnete Abnutzungsstange vorsieht.

Aus der WO 2009095113A1 ist ein Verfahren zum Bestimmen einer Profiltiefe eines Reifens bekannt, bei dem die Profiltiefe als eine Funktion der Reifenaufstandsfläche bestimmt wird.

Der Erfindung liegt die Aufgabe zugrunde, eine Vorrichtung und ein Verfahren zum Messen der Profiltiefe eines Kraftfahrzeugreifens zu schaffen, bei denen die Profiltiefe kontinuierlich während der Fahrt auf einfache und zuverlässige Weise ermittelt werden kann.

Diese Aufgabe wird durch eine Vorrichtung mit den Merkmalen des Patentanspruchs 1 und durch ein Verfahren mit den Merkmalen des Patentanspruchs 10 gelöst.

Demgemäß wird ein Verfahren und eine Vorrichtung zum Messen der Profiltiefe eines Kraftfahrzeugreifens zur Verfügung gestellt, wobei mindestens ein Sensorelement vorgesehen ist, welches zum Erfassen von Daten hinsichtlich einer Veränderung der Verformungscharakteristik des Kraftfahrzeugreifens im Bereich des Latsches ausgebildet und im Bereich der der Lauffläche gegenüberliegenden Innenseite des Kraftfahrzeugreifens fest angbringbar ist; wobei zudem eine mit dem mindestens einem Sensorelement datenverbundene Steuer- und Auswerteeinheit zum Auswerten und Weiterverarbeiten der erfassten Daten vorgesehen ist.

Bei der Erfindung ist demnach ein Sensorelement auf der Innenseite des Fahrzeugreifens oder in der Lauffläche angeordnet. Das Sensorelement befindet sich im Reifen in einem Bereich gegenüber von Profilstollen und/oder Profilrillen. Bei der Drehung des Rades (während der Fahrt) verformt sich die Lauffläche und es entsteht je nach Profiltiefe oder auch Materialstärke der Lauffläche ein mehr oder minder starker Knick am Rande des Latschbereichs. Dadurch dass das Sensorelement die mechanische Verformung erfasst und die gemessenen Werte mit vorherigen Werten verglichen werden können, kann die Profiltiefe in einer Steuer- und Auswerteeinheit anhand der von den Sensorelementen übertragenen Daten ermittelt werden.

Somit weist die vorliegende Erfindung gegenüber dem Stand der Technik den Vorteil auf, dass auf einfache und kostengünstige Weise eine zuverlässige Anzeige der augenblicklichen Profiltiefe des jeweiligen Kraftfahrzeugreifens an den Kraftfahrzeugbenutzer gewährleistet ist.

In den abhängigen Ansprüchen finden sich vorteilhafte Ausgestaltungen und Weiterbildungen der Vorrichtung gemäß Patentanspruch 1 bzw. des Verfahrens gemäß Patentanspruch 10.

Gemäß einer bevorzugten Weiterbildung ist das Sensorelement als flächiges Piezoelement oder als flächiger Dehnungsmessstreifen ausgebildet. Allerdings ist für einen Fachmann offensichtlich, dass auch andere Sensorelemente geeignet sein können, welche Daten hinsichtlich einer Veränderung der Verformungscharakteristik des Kraftfahrzeugreifens im Bereich des Latsches liefern.

Gemäß einer weiteren bevorzugten Weiterbildung erstreckt sich das Sensorelement im Wesentlichen längs der Laufrichtung des Kraftfahrzeugreifens und über mindestens einen Abschnittsbereich eines Stollens und/oder über mindestens einen Abschnittsbereich einer Rille des Kraftfahrzeugreifens.

Wenn mehrere Sensorelemente in einem Reifen angeordnet sind, so ist es vorteilhaft, diese entlang einer Umfangslinie der Lauffläche anzuordnen. Damit werden nur Messwerte erfasst, die während der Fahrt eine gleich hohe Belastung aufweisen. Denn bei einer Kurvenfahrt werden kurvenaußenliegende Bereiche der Lauffläche stärker belastet und damit verformt. Wären die Sensorelemente nur quer zur Laufrichtung angeordnet, würden die kurvenaußenliegenden Sensorelemente stärker verformt als die kurveninnenliegenden Sensorelemente. Dadurch könnte möglicherweise eine fehlerhafte Profiltiefe angezeigt werden.

Nach einem weiteren bevorzugten Ausführungsbeispiel ist dem Sensorelement oder einer ganzen Gruppe an Sensorelementen eine Übertragungseinheit zugeordnet, welche die durch das oder die Sensorelemente gemessenen Daten mittelbar oder unmittelbar an die Steuer- und Auswerteeinheit weiterleitet. Vorzugsweise befindet sich die Steuer- und Auswerteeinheit in dem Kraftfahrzeug selbst an geeigneter Position.

Erfindungsgemäß ist das Sensorelement ferner mit einer zugeordneten Radelektronik elektrisch verbunden, über welche Reifenidentifikationsdaten zu der Steuer- und Auswerteeinheit übertragbar sind und über welche noch zusätzliche Daten zu der Steuer- und Auswerteeinheit übertragbar sein können, wie beispielsweise Reifendruckdaten, Reifentemperaturdaten, Fahrzeuggeschwindigkeitsdaten, Raddrehzahldaten, Sensorelementdaten, Fahrzeugdaten, Radlastdaten oder dergleichen. Es ist für einen Fachmann offensichtlich, dass zu den oben genannten Daten auch weitere Daten zum Bestimmen der Profiltiefe herangezogen werden können, falls gewünscht und sinnvoll.

Gemäß einem weiteren bevorzugten Ausführungsbeispiel sind mehrere Sensorelemente in jeweils einem Kraftfahrzeugreifen vorgesehen und auf einer Umfangslinie längst des Umfanges der Lauffläche des jeweiligen Kraftfahrzeugreifens angeordnet. Alternativ oder zusätzlich können auch mehrere Sensorelemente in einem Kraftfahrzeugreifen quer zur Laufrichtung des Kraftfahrzeugreifens angeordnet sein.

Vorzugsweise werden während der Fahrt kontinuierlich oder in vorbestimmten Abständen Daten mittels der jeweiligen Sensorelemente erfasst und an die Steuer- und Auswerteeinheit übertragen, welche die jeweils gelieferten Daten entsprechend auswertet und die jeweils zugeordneten Profiltiefen bestimmt. Hierzu können vorbestimmte Algorithmen in Abhängigkeit der ausgewerteten Parameter verwendet werden. Die einzelnen, erfassten Daten zu unterschiedlichen Zeitpunkten und/oder die Daten zu gleichen Zeitpunkten, welche mittels unterschiedlicher Sensorelemente erfasst werden, können miteinander verglichen, auf Plausibilität überprüft und gemeinsam zur Bestimmung der eigentlichen IST-Profiltiefe des jeweiligen Reifens verwendet werden.

Gemäß einem weiteren bevorzugten Ausführungsbeispiel wird in einem Sendesignal mit jedem Messwert eine reifenindividuelle Kennung mitübertragen, um die berechnete Profiltiefe und die Radposition des dazugehörigen Kraftfahrzeugreifens zu ermitteln. Somit wird der Kraftfahrzeugbenutzer eindeutig darüber informiert, welcher Kraftfahrzeugreifen unter Umständen zu ersetzen ist.

Die Erfindung wird im Folgenden anhand mehrerer Ausführungsbeispiele unter Bezugnahme auf die zugehörigen, schematischen Figuren der Zeichnung näher erläutert. Von den Figuren zeigen:
- Fig. 1: eine schematische Darstellung einer erfindungsgemäßen Vorrichtung, die jeweils in einem der vier Reifen eines Kraftfahrzeugs angeordnet ist, gemäß einem bevorzugten Ausführungsbeispiel der vorliegenden Erfindung;
- Fig. 2: eine Ansicht eines Teilschnitts längs der Lauffläche durch einen Kraftfahrzeugreifen, in dem ein Sensorelement einer erfindungsgemäßen Vorrichtung gemäß einem bevorzugten Ausführungsbeispiel der vorliegenden Erfindung angeordnet ist;
- Fig. 3: eine Draufsicht auf die Innenseite eines Kraftfahrzeugreifens, auf welcher mehrere Sensorelemente einer erfindungsgemäßen Vorrichtung gemäß einem bevorzugten Ausführungsbeispiel der vorliegenden Erfindung angeordnet sind; und
- Fig. 4: eine Schnittansicht durch einen Reifen quer zur Laufrichtung mit mehreren Sensorelementen einer erfindungsgemäßen Vorrichtung gemäß einem bevorzugtem Ausführungsbeispiel der vorliegenden Erfindung.

In den Figuren der Zeichnung sind gleiche und funktionsgleiche Elemente und Merkmale - sofern nichts Anderes ausgeführt ist - mit denselben Bezugszeichen versehen.

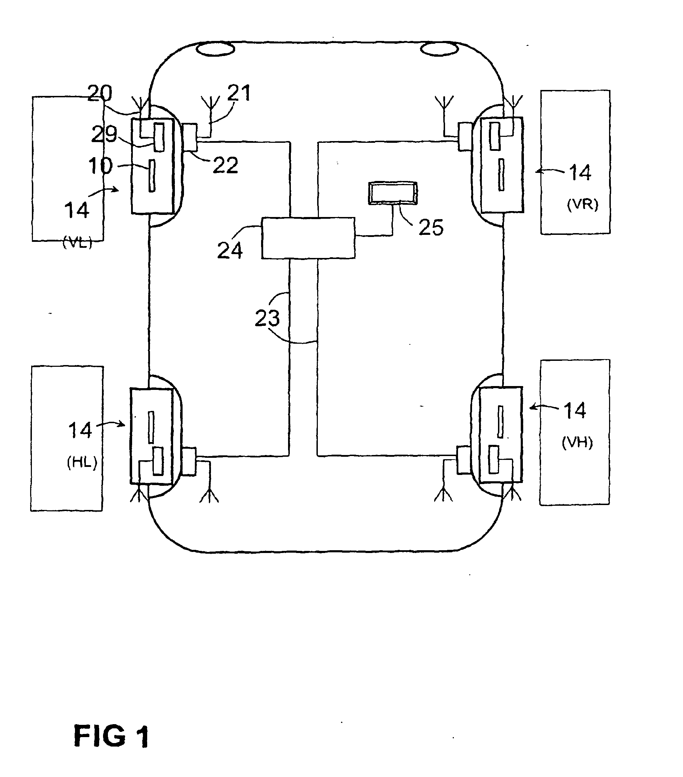

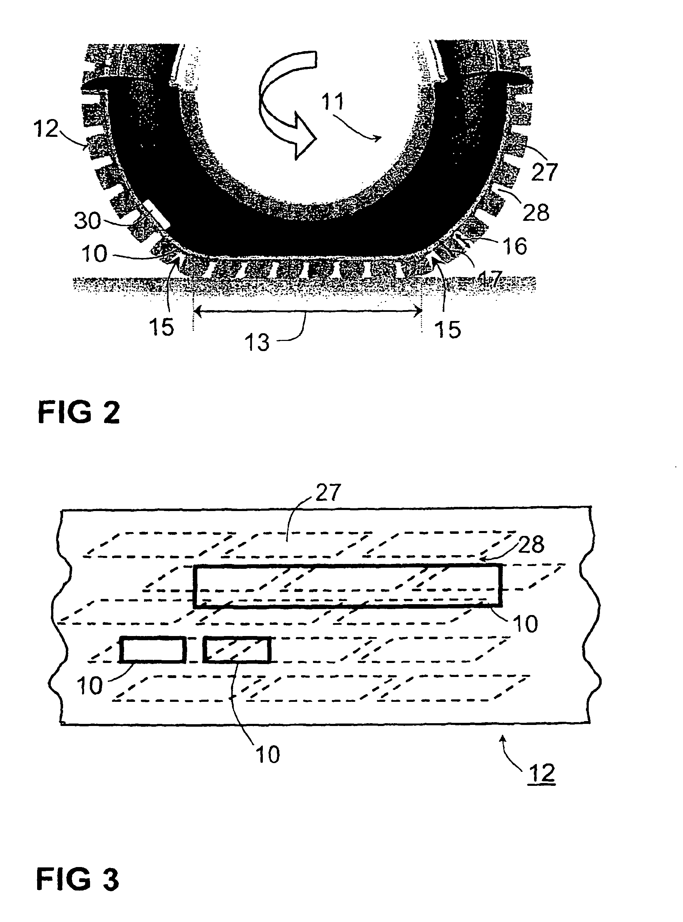

Figur 1 zeigt ein schematisches Blockschaltbild eines bevorzugten Ausführungsbeispiels einer Vorrichtung zum Messen der Profiltiefe eines Kraftfahrzeugreifens. Dabei sind ein oder mehrere Sensorelemente 10 in jeweils einem Reifen 11 auf der Innenseite des Reifens gegenüber der Lauffläche 12 oder in der Laufflächenwand angeordnet. Die Sensorelemente 10 messen die Verformung der Lauffläche 12 im Randbereich des Latsches 13. Je nach Materialstärke 17 der profilierten Lauffläche 12 entsteht am Rande des Latsches 13 quer zur Rollrichtung (Laufrichtung) des Rades 14 ein unterschiedlich starker Knick 15. Der Knick 15 stellt eine Verformung oder stärkere Biegung der Lauffläche 12 abweichend von der kreisrunden Form des Querschnitts des Reifens (insbesondere der Lauffläche 12) dar. Aus der Stärke der Verformung (Stärke der Verbiegung) und/oder durch Vergleich der aktuellen Verformung mit vorherigen Messwerten und/oder vorab gespeicherten Werten kann die Profiltiefe 16 (siehe Figur 2) des Reifens 11 hergeleitet werden.

In Figur 1 wird der Aufbau der Vorrichtung gemäß dem vorliegenden Ausführungsbeispiel exemplarisch anhand des Reifens 11 in der Radposition vorne links (VL) erläutert. Es ist für einen Fachmann offensichtlich, dass die Vorrichtungen in den Reifen 11 der Radpositionen vorne rechts (VR), hinten links (HL) und hinten rechts (HR) identisch aufgebaut sein können.

Bei dem vorliegenden Ausführungsbeispiel werden die von den Sensorelementen 10 gemessenen Daten als Signale drahtlos über Antennen 20 im jeweiligen Rad 14 zu kraftfahrzeugseitigen Antennen 21 einer jeweils zugeordneten Empfangseinheit 22 im Kraftfahrzeug gesendet. Die Übertragung kann dabei zusammen mit Reifendruckmesswerten vorgenommen werden, wie es in der Offenlegungsschrift DE 10 2007 007 135 A1, deren Offenbarungsgehalt hiermit als Bestandteil der vorliegenden Offenbarung mit einbezogen wird, beschrieben ist. Dies hat den Vorteil, dass ohnehin bereits vorhandene Antennen, Sende- und Empfangselemente einer Reifendruckmessvorrichtung mit verwendet werden können.

Von den jeweiligen Empfangseinheiten 22 werden die Daten über Signalleitungen 23 oder einen Datenbus einer zentralen Steuer- und Auswerteeinheit 24 zugeführt, welche die Daten auswertet und mit zuvor gemessenen Daten oder Referenzwerten vergleicht. Falls eine Profiltiefe 16 ermittelt wird, die einen vorgegebenen Grenzwert erreichen bzw. über- oder unterschreiten, wird eine optische oder akustische Anzeigeeinheit 25 aktiviert, durch welche der Kraftfahrzeugbenutzer auf die möglicherweise unkorrekte Profiltiefe 16 und gegebenenfalls auf die entsprechende Radposition hingewiesen wird. Somit können die Reifen 11 des Kraftfahrzeugs rechtzeitig ausgewechselt werden, bevor die Profiltiefe 16 die gesetzlich vorgeschriebene Mindestprofiltiefe oder eine andere entsprechend vorgegebene Mindestprofiltiefe erreicht hat und die Unfallgefahr aufgrund zu geringer Profiltiefe 16 zu groß wird.

Der Grenzwert muss nicht unbedingt mit der gesetzlich vorgeschriebenen Mindestprofiltiefe übereinstimmen. Vorteilhaft ist es, wenn der Kraftfahrzeugbenutzer rechtzeitig vor Erreichen der vorbestimmten Mindestprofiltiefe auf die drohende, zu starke Abnutzung der Reifen 11 hingewiesen wird. Es könnte aufgrund des bisherigen Verlaufs der Abnutzung (auch als Gradient der Abnutzung oder auch als Gradient des Verlaufs der Profiltiefe 16 bezeichnet) auch angegeben werden, wie viele Kilometer möglicherweise noch zurückgelegt werden können, bevor die Reifen 11 auf jeden Fall gewechselt werden sollten. Ansonsten können aufgrund der zu geringen Profiltiefe 16 verkehrskritische Situationen entstehen und zu einem Unfall führen.

Die Messwerte und/oder die entsprechenden Profiltiefen 16 können auch beispielsweise in einen nicht in den Figuren dargestellten Diagnosespeicher geschrieben werden und mit Hilfe eines Diagnosegeräts in einer Werkstatt ausgelesen werden.

Jedem Rad 14 kann jeweils eine Empfangseinheit 22 örtlich zugeordnet sein, indem die Empfangseinheit 22 beispielsweise am Radkasten auf Höhe der Lauffläche 12 angeordnet ist. Wenn sich das Rad 14 dreht, kommt die Sendeeinheit im Rad 14 bei jeder Umdrehung einmal in die Nähe der Empfangseinheit 22 für eine entsprechende Datenübertragung.

Die Antenne 21 kann im Luftventil des Schlauches des Reifens 11 angeordnet sein, um von dort die Signale besser und weitgehend ungestört durch den Aufbau des Reifens (wie beispielsweise einem Stahlgürtel) zu der kraftfahrzeugseitigen Antenne 22 zu übertragen. Die Antenne 21 kann auch als Schleife im Mantel des Reifens 11 zur Fahrzeugseite hin angeordnet sein, um die Signale gut zur Antenne 22 übertragen zu können.

Die Sendesignale können bezüglich ihrer Amplitude oder Signalstärke auch so stark sein, dass die Position der Empfangseinheit 22 keine Rolle spielt und die Signale von jeder Antenne 21 im Rad 14 gut von einer einzigen, zentralen Empfangseinheit (diese ist in den Figuren nicht dargestellt) empfangen und ausgewertet werden können.

Dann ist es jedoch vorteilhaft, wenn die jeweiligen Vorrichtungen im Reifen 11 individuell codiert sind, wobei diese Codierung einer Radposition zugeordnet sein sollte. Diese Codierung oder auch reifen- oder radindividuelle Kennung wird mit jedem Messwert für die Verformung in dem übertragenen Signal zu der Steuer- und Auswerteeinheit 24 übertragen. Die Zuordnung der Kennung zu der jeweiligen Radposition im Kraftfahrzeug ist beispielsweise in der Steuer- und Auswerteeinheit 24 abgespeichert.

Wenn bei einer anfänglichen Initialisierung jeder Codierung oder Kennung eine Radposition zugewiesen wird, kann der ermittelten Profiltiefe 16 eine Radposition zugeordnet und dem Kraftfahrzeugbenutzer mitgeteilt werden, welcher Reifen 11 zumindest auszutauschen ist. Selbstverständlich können dann auch mehrere oder alle Reifen 11 ausgewechselt werden.

Es können auch die aktuellen Profiltiefen 16 aller Reifen 11 des Kraftfahrzeugs unabhängig vom Erreichen eines Grenzwerts (Über- oder Unterschreiten eines Schwellwerts) durch die Anzeigeeinheit 25 angezeigt werden, damit der Kraftfahrzeugbenutzer oder das Servicepersonal selber entscheiden können, ob die Reifen 11 gewechselt werden sollten.

Jedem Sensorelement 10 oder einer Gruppe von Sensorelementen 10 in einem Reifen 11 können jeweils eine Sendeeinheit 29 oder Signalübertragungseinheit im Reifen 11 zugeordnet sein, welche die gemessenen Werte als Signal unmittelbar oder mittelbar zu weiteren Elementen und/oder letztendlich zu einer Steuer- und Auswerteeinheit 24 übertragen.

In Figur 2 sowie in den weiteren Figuren haben funktionsgleiche oder konstruktionsgleiche Elemente dieselben Bezugszeichen wie in Figur 1. In Figur 2 ist beispielhaft ein Sensorelement 10 dargestellt, welches am Rande eines Latsches 13 des Reifens 11 auf der Innenseite der Lauffläche 12 entsprechend angebracht ist, d.h. gerade im Bereich des Knickes 15. Das Sensorelement 10 ist dadurch im Vergleich zu seiner vorherigen Form deformiert oder stärker verbogen, was messtechnisch erfasst wird.

Der Latsch 13 oder die Reifenaufstandsfläche ist derjenige Teil des Reifens 11, der Kontakt zur Straße hält. Infolge des Gewichts des Fahrzeugs und dem elastischen Reifen 11 weicht die äußere Form der Lauffläche 12 von der kreisrunden Form ab.

Als Lauffläche 12 wird hier der profilierte Umgangsstreifen bezeichnet, auf den im Inneren des Reifens 11 die Karkasse 18 aufgebracht sein kann. Die Lauffläche 12 ist der Teil des Reifens, der an seiner Außenseite mit der Straße in Berührung kommt. Die Gummimischung der Lauffläche 12 entscheidet zusammen mit der Abstimmung der Karkasse über Abriebfestigkeit und Haftfähigkeit eines Reifens. Die Lauffläche 12 enthält das Profildesign (Profilblöcke oder -stollen 27 und Profilrillen 28 oder Profilkanäle). Die Stollen 27 können auch Lamellen (Einschnitte in einen Profilblock oder Profilstollen) aufweisen, deren Profiltiefe nicht entscheidend ist für die eigentlich zu überwachende Profiltiefe 16 im mittleren Bereich der Lauffläche 12. Denn nur die Profiltiefe 16 der Hauptprofilrillen ist entscheidend.

Das Sensorelement 10 ist auf der Innenseite des Fahrzeugreifens 11 oder in der Lauffläche 12 angeordnet. Dies bedeutet, dass das Sensorelement im Material der Lauffläche 12 (auch als "in der Laufflächenwand befindlich" bezeichnet) in einer Karkasse 18, zwischen Karkasse 18 und Lauffläche 12 oder auch auf der Reifeninnenseite der Karkasse 18 (d.h. in dem Bereich, in dem sich die Luft des Reifens 11 befindet) angeordnet sein kann.

In Figur 2 ist am Rande des Latsches 13 jeweils ein Knick 15 in der Lauffläche 12 quer zu Rollrichtung des Rades 14 dargestellt. Der Knick 15 ist dabei der Übergang der kreisrunden Umfangslinie der Lauffläche 12 in den Bereich des Latsches 13, in dem die Umfangslinie etwa parallel zum Boden verläuft. Wie stark der Knick 15 ist, hängt dabei von der Materialstärke 17 der Lauffläche 12, der Profilierung in diesem Bereich und/oder dem Reifenluftdruck ab.

Da die Lauffläche 12 profiliert ist, d.h. mit Profilstollen (im Folgenden als Stollen 27 bezeichnet) und Profilrillen (im Folgenden als Rillen 28 bezeichnet) versehen ist, ist der Knick 15 zumindest bei einer Geradeausfahrt über die Breite des Reifens 11 im Wesentlichen gleichförmig ausgebildet, da der Reifen 11 üblicherweise in seiner Lauffläche beispielsweise durch einen Stahlgürtel stabilisiert ist.

Die Materialstärke 17 im Bereich der Stollen 27 nimmt mit dem Abrieb des Reifens 11 ab. Einhergehend damit nimmt die Profiltiefe 16 ab, da der Boden der Rillen 28 nicht abgenutzt wird. Der Knick 15 am Rande des Latsches 13 wird "schärfer" bzw. umso ausgeprägter, je dünnwandiger die Lauffläche 12 wird. Zusätzlich ist der Knick 15 noch abhängig vom jeweils herrschenden Reifendruck, denn je geringer der Reifendruck ist desto größer ist der Knick 15.

Der Knick 15 oder auch allgemein die Verformung der Lauffläche 12 im Randbereich des Latsches 13 kann im vorliegenden Fall zweimal pro Reifenumdrehung detektiert werden, und zwar jeweils am Rande des Latschbereichs. Somit erfährt das Sensorelement 10 zweimal pro Umdrehung eine Verformung, die über die gesamte Länge in Umfangrichtung des Reifens 11 gesehen wandert. Um diese Verformung zu erfassen, ist zumindest ein entsprechendes Sensorelement 10 im Material der Lauffläche 12, auf der Innenseite der Karkasse 18 oder zwischen Karkasse 18 und Lauffläche 12 im Bereich gegenüber des Profils der profilierten Lauffläche 12 angeordnet und vorzugsweise fest mit dem Material verbunden.

Das Sensorelement 10 ist dabei vorzugsweise derart mit der Lauffläche 12 verbunden, dass es die Bewegung und Verformung der Lauffläche 12 weitgehend synchron mitmacht. Das Sensorelement 10 dreht sich somit mit dem Rad 14 mit und durchläuft zweimal pro Umdrehung den Knick 15 im Randbereich des Latsches 13. Infolgedessen erfährt das Sensorelement 10 durch den Knick 15 zweimal pro Umdrehung eine mechanische Verformung, die gemessen wird.

Diese Verformung wird durch ein geeignet ausgestaltetes Sensorelement 10 messtechnisch erfasst. Gemessene Werte werden dann als Daten an die datenweiterverarbeitende Steuer- und Auswerteeinheit 24 gesendet. Dort werden die Werte mit einer Reihe von zuvor gemessenen Werten oder mit Anfangswerten verglichen, die nach dem erstmaligen Einsatz der Reifen 11 bei einer Art Initialisierung aufgenommen wurden. Somit kann der zeitliche Verlauf der Reifenprofilabnutzung und damit - ausgehend von einer Anfangsprofiltiefe - die aktuelle Profiltiefe 16 ermittelt werden, insbesondere falls die Anfangsprofiltiefe und die Abhängigkeit der Materialstärke 17, des Reifendrucks und der Eigenschaften des Reifenmaterials auf die Abnutzung bekannt sind.

Die Messung der Verformung kann dabei jedesmal stattfinden, wenn das Sensorelement 10 den Knick 15 durchläuft. Die Verformung kann beispielsweise auch nur bei jedem n-ten Durchlauf erfasst werden. Denn bei der Abnutzung der Lauffläche 12 handelt es sich um einen langsam von statten gehenden Vorgang. Der Unterschied in der Profiltiefe 16, die bei zwei aufeinander folgenden Umdrehungen des Rades 14 ermittelt wurde, ist sicherlich so gering, dass sie messtechnisch kaum zu erfassen ist. So könnten die Messwerte beispielsweise jeden Kilometer oder alle 1000 Umdrehungen erfasst werden, um mit der Zeit einen Verlauf der Profiltiefen 16 zu erhalten oder einen Gradienten des Verlaufs zu erhalten, aus dem dann eine Voraussage über das Erreichen des Grenzwertes bei eine Abnutzung zu treffen ist, vorausgesetzt, der Reifen 11 nutz sich gleichmäßig und gleichförmig ab.

Das Sensorelement 10 sollte sich in einem Bereich zumindest gegenüber der Stollen 27 flächig erstrecken. Es kann sich auch gegenüber einem Bereich erstrecken, in dem ein oder mehrere Rillen 28 und ein oder mehrere Stollen 27 vorhanden sind. Ebenfalls ist es möglich, die Verformung im Bereich gegenüber einem Stollen 27 im Vergleich zur Verformung im Bereich gegenüber einer Rille 28 mit jeweils einem Sensorelement 10 zu erfassen. Falls die flächige Erstreckung längs der Fahrtrichtung (längs des Umfangs der Lauffläche 12 oder längs der Rollbewegung des Rades 14) vorgesehen ist, wird der Knick 15 am Rande des Latschbereichs beim Drehen des Rades 14 solange auf das Sensorelement 10 einwirken, wie sich der Knick 15 im Bereich des Sensorelements 10 beim Drehen des Rades 14 befindet. Je länger ein Sensorelement 10 ist, desto länger wirkt die Verformung auf das Sensorelement 10 ein. Infolgedessen wird ein deutlicheres oder größeres Dehnungs- oder Stauchungssignal erzeugt, wodurch die Verformung besser wiedergegeben wird.

Falls der Reifen 11 über kleine, spitze Gegenstände rollt, sollten vorzugsweise diese Messwerte nicht die Messung der Profiltiefe 16 beeinflussen, da sie zwar eine Verformung hervorrufen, aber messtechnisch einen Fehler darstellen können. Kurz andauernde Verformungen der Lauffläche 12, die später nicht mehr vorhanden sind, sollten für die Bestimmung der Profiltiefe 16 ausgeblendet werden. Nur ständig gemessene Änderungen der Verformung sollten vorzugsweise für die Bestimmung der Profiltiefe 16 verwendet werden.

Ein Überfahren einer Bordsteinkante erzeugt sicherlich einen großen Knick 15 und damit eine große Verformung und damit einen großen Messwert. Wurde jedoch in den zuvor gemessenen Werten und in den danach gemessenen Werten solch eine große Verformung nicht erkannt, liegt keine Abnutzung des Profils zugrunde, sondern ein "einmaliges" Ereignis, welches bei der Auswertung der Profiltiefe 16 ignoriert werden kann.

Gemäß Figur 2 kann eine Radelektronik 30 mit in dem Reifen 11 angeordnet sein, wie es auch in der DE 10 2007 007 135 A1 beschrieben ist und deren Beschreibung Bestandteil der Offenbarung der vorliegenden Anmeldung ist. Die Radelektronik 30 kann Reifenparameter wie beispielsweise Luftdruck der Reifen 11 und/oder Temperatur messen und diese Messwerte an die Steuer- und Auswerteeinheit 24 senden. Die Steuer- und Auswerteeinheit 24 kann zusätzlich den Reifendruck und/oder die Temperatur im Reifen und außerhalb für die Ermittlung der Profiltiefe 16 mitberücksichtigen, da unterschiedliche Reifendrücke trotz gleicher Profiltiefe 16 unterschiedliche Messwerte liefern.

Für die Bestimmung der Profiltiefe 16 können auch die Umgebungsbedingungen mitberücksichtigt werden. Bei sehr kalter Umgebung ist das Gummi der Reifen steif, während bei sehr warmer Umgebung die Beweglichkeit des Reifenmaterials zunimmt. Dies hat auch Auswirkungen auf die Größe des Knicks 15 und damit auf die Ermittlung der Profiltiefe 16.

Als Sendeeinheit 29 oder Übertragungseinheit im Reifen 11 kann auch vorteilhaft die gegebenenfalls ohnehin vorhandene Radelektronik 30 mitbenutzt werden. Folglich können die Messwerte von den Sensorelementen 10 über die Radelektronik 30 mittelbar oder unmittelbar zu der Steuer- und Auswerteeinheit 24 gesendet werden. Hierzu steht das Sensorelement 10 in elektrischer Verbindung (leitungsgebunden oder drahtlos) mit der Radelektronik 30. Es ist besonders vorteilhaft, wenn das Sensorelement 10 nahe der Radelektronik 30 angeordnet ist, damit die Übertragungswege kurz und damit die Übertragungsverluste auf dem Weg dorthin gering sind.

Falls die Radelektronik 30 eine eigene Energieversorgung aufweist, kann diese vorzugsweise auch zur Energieversorgung der Sensorelemente 10 dienen. Damit wird das Sensorelement 10 leichter und erzeugt eine geringere Unwucht im Rad 14. Die Energie kann auch von den fahrzeugseitig angeordneten Elementen (über die Antenne 21 zu der Antenne 20 im Rad) zu der Radelektronik 30 gesendet und dort für die Energieversorgung der Radelektronik 30 und der Sensorelemente 10 verwendet werden. Somit wird vorteilhaft keine Batterie und kein Akkumulator im Rad 14 benötigt.

Wenn sich das Rad 14 dreht, wandert in Figur 3 der Latsch 13 (in Figur 3 gestrichelt dargestellt) relativ zu dem Sensorelement 10 in Drehrichtung entsprechend der Drehgeschwindigkeit weiter. Relativ zum Boden gesehen bleibt der Knick 15 in der Nähe des Bodens weitgehend ortsfest. Da sich jedoch das Rad 14 dreht, wandert das flächig ausgedehnte Sensorelement 10 über den Knick 15 am Rande des Latsch 13, und zwar bei jeder Umdrehung über den rückwärtigen und den vorderseitigen Knick 15.

Um möglichst große Messwerte zu erhalten, kann sich der Sensor streifenförmig - wie in Figur 3 dargestellt - längs der Lauffläche 12 über mehrere Bereiche gegenüber der Stollen 27 und Rillen 28 erstrecken. Der Knick 15 wandert folglich über die Fläche des Sensorelements 10, und zwar zeitlich umso länger, je länger sich das Sensorelement 10 in Umfangsrichtung des Reifens erstreckt. Die lange Einwirkzeit erzeugt ein größeres und deutlicher messbares Signal. Allerdings hat ein großes und damit schwereres Sensorelement 10 den Nachteil, dass durch das Gewicht eine Unwucht in den Reifen 11 gebracht wird, die gegebenenfalls wieder ausgewuchtet werden muss.

Es können auch alternativ oder zusätzlich mehrere Sensorelemente 10 - wie in Figur 3 in der unteren Bildhälfte dargestellt - in einem Reifen 11 angeordnet sein. So können ein Sensorelement 10 im Bereich gegenüber zumindest einem Teil eines Stollens 27 und ein anderes Sensorelement 10 gegenüber zumindest einem Teil einer Rille 28 angeordnet sein. Folglich sind die Verformungen des ersten und zweiten Sensorelements 10 miteinander vergleichbar, was aus Plausibilitätsgründen vorteilhaft ist. Es können die Einzelwerte oder ein Mittelwert zu der Steuer- und Auswerteeinheit 24 übertragen und dort ausgewertet werden.

Allerdings ist die Verformung im Bereich eines Stollens 27 im Vergleich zu der Verformung im Bereich einer Rille 28 nur gering verglichen mit der Gesamtverformung der gesamten Lauffläche 12 quer zur Lauffläche 12 im Bereich des Knicks. Denn im Bereich eines Stollens 27 wird die Lauffläche 12 zwar aufgrund der dickeren Materialstärke 17 weniger stark verformt als im Bereich einer Rille 27 (dies ist abhängig von der Materialstärke 17, der Breite der Stollen 27 und der Breite der Rillen 28), aber diese Verformungen quer zur Laufrichtung werden durch die Struktur der profilierten Lauffläche 12 und durch die Gesamtmaterialstärke und -steifigkeit zum größten Teil ausgeglichen.

Dennoch sollte der Ort des Anbringens der Sensorelemente 10 und deren Ausdehnung genau bekannt sein, um die zeitliche Veränderung der Profiltiefe 16 genau detektieren zu können. Bei einem Reifen ohne Stollen (profilloser Reifen) wären die Verformungen quer zur Laufrichtung konstant. Die Verformung längs zur Laufrichtung (Knick 15 aufgrund des Latsches 13) ändert sich mit der Zeit aufgrund der Abnutzung der Stollen 27. Dies kann über eine lange Zeit gut gemessen werden, indem die gemessenen Istwerte mit früheren Messwerten und/oder dem zeitlichen Verlauf der Messwerte verglichen werden.

Durch Auswerten der Verformung im Randbereich des Latsches 13 bei einem Prototypen des Reifens 11 können die entsprechenden Werte für die Verformung vorab ermittelt und die dazugehörige Profiltiefe 16 als Referenzwert in Verbindung gesetzt werden. Folglich erhält man Referenzwerte für die Profiltiefe 16 bezogen auf die Verformung der Sensorelemente 10. Die Referenzwerte werden vorzugsweise bei einem vorbestimmten Reifendruck aufgenommen. Somit erhält man eine Messwerttabelle, die eine Profiltiefe 16 mit einem Messwert in Verbindung setzt. Die Messwerttabelle kann als Referenztabelle in der Steuer- und Auswerteeinheit 24 abgespeichert werden. Der während der Fahrt des Kraftfahrzeugs aktuell gemessene Reifendruck und/o-der die Temperatur können beispielsweise verwendet werden, die gemessenen Werte für die Verformung und damit die ermittelte Profiltiefe 16 entsprechend zu korrigieren.

Es kann auch alternativ oder zusätzlich ein Gradient der Abnutzung der Lauffläche 12 ermittelt werden. Mit der Abnutzung einher geht die Verkleinerung der Profiltiefe 16. Anhand des Gradienten kann ebenfalls die Profiltiefe 16 und das Erreichen eines Grenzwertes (Über- oder Unterschreiten eines Schwellwertes) alternativ oder zusätzlich bestimmt werden, zu dem dann die Reifen 11 gewechselt werden sollten, damit die Lauffläche 12 noch immer genug Profiltiefe 16 hat. Damit wird die Fahrsicherheit weiter verbessert.

Um die Messgenauigkeit zu verbessern sollten die Sensorelemente 10 vorzugsweise in Umfangsrichtung der Lauffläche 12, d.h. entlang einer Umfangslinie der Lauffläche 12 angeordnet sein. Entlang einer solchen Umfangslinie ist die Belastung des Reifens 11 im Latschbereich gleich groß im Unterschied zu einer Queranbringung. Denn bei einer Kurvenfahrt ist die Belastung auf der kurvenäußeren Seite höher als auf der kurveninneren Seite. Daher würde möglicherweise bei einer länger andauernden Kurvenfahrt eine fehlerhafte Profiltiefe 16 detektiert, die bei einer Geradeausfahrt nicht mehr vorhanden ist. Darüber hinaus kann der Knick 15 bei der Kurvenfahrt nicht gleichgroß quer zur Laufrichtung ausgebildet sein, beispielsweise durch die leichte Schräglage des Kraftfahrzeugs.

Es ist daher vorteilhaft, die Sensorelemente 10 längs zur Laufrichtung im mittleren Bereich der Lauffläche 12 anzuordnen und dort die Verformung zu messen. Denn in diesem Bereich ist auch die Mindestprofiltiefe vorzugsweise zu messen.

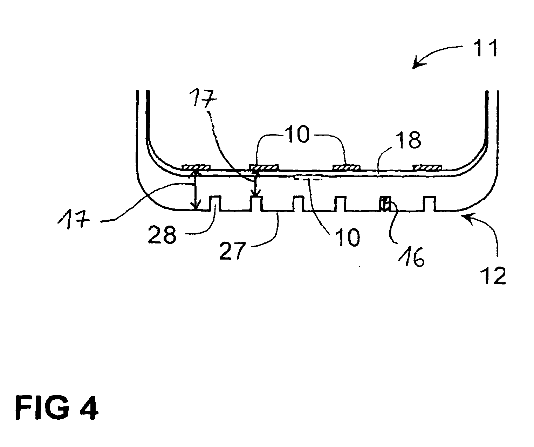

Die jeweilige Profiltiefe 16 über die Breite des Reifens 11 (quer zur Laufrichtung) kann insbesondere durch Sensorelemente 10 erfasst werden, wenn ein oder mehrere Sensorelemente 10 im Wesentlichen quer zur Laufrichtung über die gesamte Breite angeordnet sind (Figur 4). Wenn sich mit der Zeit die Profiltiefe 16 an einer Stelle in Querrichtung gesehen verstärkt gegenüber den Nachbarstellen verändert, kann der Kraftfahrzeugbenutzer somit darauf aufmerksam gemacht werden.

Fig. 4 illustriert in gestrichelter Darstellung ein Sensorelement 10 gemäß einem weiteren bevorzugten Ausführungsbeispiel der vorliegenden Erfindung, wobei dieses Sensorelement 10 an der der Lauffläche 12 zugewandten Seite der Karkasse 18 angeordnet ist.

Die Profiltiefe 16 ist durch den Unterschied zwischen der Höhe bzw. Außenfläche des Stollens 27 und der Tiefe bzw. Bodenfläche der Rille 28 gekennzeichnet, wie in Fig. 4 dargestellt ist. Die Materialstärke 17 hingegen ist durch die Dicke des Reifenmaterials zwischen beispielsweise einem auf der Innenseite des Kraftfahrzeugreifens 11 angeordneten Sensorelement 10 und der äußeren Mantelfläche der Lauffläche 12 gekennzeichnet. Die Materialsträrke ist im Bereich eines Stollens 27 größer ausgebildet als im Bereich einer Rille 28, wie ebenfalls in Fig. 4 illustriert ist. Die Materialstärke 17 im Bereich eines Stollens 27 ändert sich durch Abnutzung des Reifens 11 im Bereich der Stollen 27, wohingegen sich die Materialstärke 17 im Bereich der Rillen 28 hierbei nicht ändert. Folglich ändert sich die Profiltiefe 16 entsprechend mit der Abnutzung des Reifens 11 im Bereich der Stollen 27, d. h. es nutzen sich lediglich die Stollen 27 aufgrund eines Kontaktes mit dem Sraßenbelag ab, wodurch sich auch lediglich die Materialstärke 17 im Bereich der Stollen 27 ändert. Somit ist die jeweilige Stollenhöhe maßgeblich für die Änderung der Profiltiefe 16.

Ein zu hoher Reifendruck kann unter Umständen eine stärkere Abnutzung in der Mitte der Lauffläche 12 erzeugen. Ein zu geringer Reifendruck kann hingegen unter Umständen eine Abnutzung an den Randbereichen der Lauffläche 12 mit sich bringen. Auch infolge anderer Ursachen (beispielsweise fehlerhafte Spureinstellung etc.) kann eine ungleichmäßige Abnutzung quer zur Laufrichtung entstehen, auf die der Kraftfahrzeugbenutzer aufmerksam gemacht werden kann, wenn die Sensorelemente 10 quer zur Lauffläche 12 an mehreren Stellen angeordnet sind.

Die Sensorelemente 10 können auch längs der Umfangslinie und quer zur Rollrichtung ausgebildet oder angeordnet sein. Folglich kann die komplette Lauffläche 12 bezüglich der Abnutzung vorteilhaft messtechnisch erfasst werden.

Vorteilhafterweise sind die Sensorelemente 10 in einem Bereich angeordnet, in dem gegenüberliegend auf der Lauffläche 12 ein Übergang von einer Rille 28 zu einem Stollen 27 oder umgekehrt vorhanden ist. Im Bereich der Rille 28 sind die Verformungen lokal zwar am größten aufgrund der geringen Materialstärke 17 der Lauffläche 12 in diesem Bereich. Jedoch lässt die gesamte Steifigkeit der profilierten Lauffläche 12 die dadurch erzeugten Verformungen sehr klein erscheinen. Daher ist es vorteilhaft, den zeitlichen Verlauf der Verformung zu betrachten, die durch dasselbe Sensorelement 10 und damit an derselben Stelle in der Lauffläche 12 erfasst wurden. Daraus kann anschließend die Profiltiefe 16 für diesen Ort ermittelt werden. Für die restliche Lauffläche 12 wird nun vorzugsweise angenommen, dass die Lauffläche sich gleichmäßig über ihren Umfang abnutzt.

Um genauere Werte für die Profiltiefe 16 zu erhalten, ist es vorteilhaft, ein oder mehrere Sensorelemente 10 im Bereich einer Rille 28 und ein oder mehrere Sensorelemente 10 im Bereich eines Stollens 27 anzuordnen, und die erfassten Messwerte miteinander zu vergleichen. Zusätzlich können auch hier eine Reihe von Messwerten, die zeitlich nacheinander aufgenommen wurden, miteinander in Beziehung gesetzt werden, um die Profiltiefe 16 zu bestimmen.

Weiterhin können zur Auswertung der Profiltiefe 16 Messwerte miteinander in Beziehung gesetzt werden, die zuvor (oder bei vorherigen Fahrten) und gegebenenfalls auch danach gemessen wurden. Somit kann auch eine Plausibilitätsbetrachtung gemacht werden, ob die zu einem bestimmten Zeitpunkt gemessenen Werte Messfehler oder korrekte Messwerte darstellen.

Die Messwerte sind zudem von dem aktuellen Reifendruck abhängig. Aktuelle Absolutwerte für die Profiltiefe 16 können dann zuverlässig angegeben werden, wenn die bisherigen Messwerte, gespeicherte Referenzwerte für die anfängliche Materialstärke 17, Materialwerte des Reifens 11 und deren Einfluss auf den Knick 15, die aktuell herrschende Temperatur im Reifen und/oder der aktuelle Reifendruck bei der Bestimmung der Profiltiefe 16 berücksichtigt werden.

Die Sensorelemente 10 können beispielsweise als Piezoelemente ausgebildet sein, bei denen bei mechanischer Verformung eine elektrische Spannung erzeugt wird. Die Höhe der Spannung wird gemessen und der Messwert wird letztendlich zu der Steuer- und Auswerteeinheit 24 übertragen, woraus dann die Profiltiefe 16 errechnet wird.

Falls Piezoelemente verwendet werden, kann zudem die Energie für das Übertragen der Messwerte infolge der Verformung des Sensorelements 10 erzeugt werden, ohne dass eine zusätzliche Energiequelle benötigt wird. Denn bei Verformung des Piezoelements erzeugt dieses eine Spannung, die bei geeigneter Ausgestaltung des Piezoelementes für die Energieversorgung verwendet werden kann.

Die Sensorelemente 10 können auch Dehnungsmessstreifen enthalten, deren Widerstandswert sich bei Verformung (Dehnung, Biegung oder Stauchung) ändert. Durch eine Widerstandsmessung mit Hilfe einer Strom- oder Spannungsmessung kann ein Messwert für die aktuelle Profiltiefe 16 ermittelt werden, da die Verformung der Lauffläche 12 einhergeht mit einer Änderung der Profiltiefe 16.

Es sind auch andere Technologien für die Sensorelemente 10 zum Erfassen der Verformung möglich. Bei allen Arten von Sensorelementen 10 ist es wichtig, dass das Sensorelement 10 die Verformung der Lauffläche 12 abweichend von der runden Form des Reifens 11 messen kann. Daher sollte das Sensorelement 10 einerseits leicht verformbar sein sowie andererseits fest und flächig mit dem Reifenmaterial verbunden sein. Dann macht das Sensorelement 10 die Verformung infolge des Latsches 13 gut mit und liefert kontinuierlich oder intermittierend Daten an die Steuer- und Auswerteeinheit 24.

Die beste Übertragung der Verformung auf das Sensorelement 10 ist dann gegeben, wenn das Sensorelement 10 mit dem Laufflächenmaterial oder mit der Karkasse 18 flächig fest verbunden ist. Ansonsten sollte das Sensorelement 10 auf der Innenseite der Lauffläche 12 flächig mit dem Reifenmaterial verklebt oder einvulkanisiert sein.

Je leichter das Sensorelement 10 ist, desto geringer ist die Unwucht durch das Sensorelement 10. Da es Reifen 11 mit Längs-, Quer- oder Schrägrillen gibt, kann es vorkommen, dass der Knick 15 nicht immer genau quer zur Laufrichtung ausgebildet ist, sondern lokal leicht davon abweicht. Um jede Verformung zu messen, kann das Sensorelement 10 vorzugsweise in jeder Richtung Verformungen aufnehmen und messtechnisch erfassen. Das heißt das Sensorelement 10 sollte in jeder Richtung die Verformung mitmachen und auf die Verformung sensibel reagieren.

Bei der Auswertung der Messwerte werden die Messsignale von den verschiedenen Reifen 11 am Kraftfahrzeug vorzugsweise getrennt voneinander ausgewertet. Hierzu ist es vorteilhaft, wenn im Messsignal eine Codierung oder Kennung für die Radposition mitenthalten ist. Es kann aber auch eine mechanische, örtliche Zuordnung von Rad 14 zu kraftfahrzeugseitiger Empfangseinheit 22 vorhanden sein, wobei dann die Messsignale auf getrennten Wegen als eigenes Signal oder zu eigenen Zeiten zur Steuer- und Auswerteeinheit 24 geleitet werden.

Die Messwerte werden beispielsweise während der Fahrt (rollendes Rad 14) kontinuierlich aufgenommen. Um den Energieverbrauch zum Betreiben der Sensorelemente 10 und für die Übertragung der gemessenen Daten zu reduzieren, können auch nur bei jeder n-ten Radumdrehung Messwerte aufgenommen und weitergeleitet werden. Vorteilhaft ist es, wenn einzelne Ausreißer bei den Messwerten automatisch ignoriert werden. Hierzu werden beispielsweise die aktuellen Messwerte mit den Messwerten zuvor und gegebenenfalls auch danach verglichen. Wird festgestellt, dass plötzlich im Messwertverlauf ein Sprung (Messwert unterscheidet sich um mehr als einen vorgegebenen Betrag von dem oder den vorherigen Messwerten) in der Profiltiefe 16 vorhanden ist, so werden die nachfolgenden Messwerte genauer betrachtet. Kehren die Messwerte wieder zu dem davor befindlichen, über längere Zeit aufgenommenen Niveau zurück, so hat es sich um einen Messfehler gehandelt, der keine Anzeige für den Kraftfahrzeugbenutzer aktivieren soll. Bleibt ein Sprung in der Profiltiefe 16 erhalten, so könnte es passiert sein, dass ein Stück des Reifenprofils, wie beispielsweise ein Stollen 27, im Bereich gegenüber des Sensorelements 10 mechanisch beschädigt oder herausgerissen worden ist. Gegebenenfalls kann dann eine Anzeige für den Kraftfahrzeugbenutzer aktiviert werden, der daraufhin den Reifen 11 selber inspizieren oder dies veranlassen kann.

Da eine Abnutzung in der Regel nur langsam von statten geht, können viele Messwerte über die Zeit gemittelt werden. Kurzzeitige Ausreißer machen sich dann automatisch weniger stark bemerkbar. Über eine Langzeitauswertung der Messwerte, die in der Steuer- und Auswerteeinheit 24 gespeichert werden können, kann dann eine zuverlässige Aussage über die Profiltiefe 16 und das Erreichen eines Grenzwerts für die Profiltiefe 16 getroffen werden.

Auf die Messwerte können auch andere mathematische Verfahren/Algorithmen angewendet werden, wie beispielsweise Approximation der Messwerte durch eine Kurve und daraus Berechnen der Profiltiefe 16 oder der Zeit/Anzahl der Kilometer, die noch gefahren werden können, bevor die Reifen 11 zu wechseln sind.

Eine Warnung für den Kraftfahrzeugbenutzer wird vorzugsweise deutlich vor Erreichen der gesetzlich vorgeschriebenen Mindestprofiltiefe erfolgen, damit einerseits ausreichend Sicherheit bei Messungenauigkeiten vorhanden ist und andererseits der Kraftfahrzeugbenutzer Zeit genug hat oder noch ausreichend lange fahren kann, bis die Reifen 11 gewechselt werden. Der Kraftfahrzeugbenutzer kann auch auf die noch mit denselben Reifen 11 zu fahrende Strecke hingewiesen werden, bis zu der noch gefahrloses Fahren aufgrund des Reifenprofils möglich ist.

Obwohl die vorliegende Erfindung anhand bevorzugter Ausführungsbeispiele vorstehend beschrieben wurde, ist sie darauf nicht beschränkt, sondern kann auf vielfältige Weise modifiziert werden. Auch können die vorgenannten Ausführungsbeispiele beliebig miteinander kombiniert werden

Die Vorrichtung zum Messen der Profiltiefe 16 eines Kraftfahrzeugreifens kann nicht nur in Reifen von Personenfahrzeugen, sondern auch in Motorrädern, Lastkraftwagen oder sonstigen Nutzfahrzeugen Verwendung finden.

## Patentansprüche

1. Vorrichtung zum Messen der Profiltiefe (16) eines Kraftfahrzeugreifens (11), mit:
mindestens einem Sensorelement (10), welches zum Erfassen von Daten hinsichtlich einer Veränderung der
Verformungscharakteristik des Kraftfahrzeugreifens (11) im Bereich des Latsches (13) ausgebildet und im Bereich der der Lauffläche (12) gegenüberliegenden Innenseite des Kraftfahrzeugreifens (11) fest anbringbar ist; und
einer mit dem mindestens einen Sensorelement (10) datenverbundenen Steuer- und Auswerteeinheit (24) zum Weiterverarbeiten der erfassten Daten,
**dadurch gekennzeichnet, dass** das mindestens eine Sensorelement (10) mit einer zugeordneten Radelektronik (30) elektrisch verbunden ist, über welche
Reifenidentifikationsdaten zu der Steuer- und Auswerteeinheit (24) übertragbar sind.

2. Vorrichtung nach Anspruch 1,
**dadurch gekennzeichnet,**
**dass** das mindestens eine Sensorelement (10) als flächiges Piezoelement ausgebildet ist, welches bei flächiger, mechanischer Verformung eine elektrische Spannung erzeugt.

3. Vorrichtung nach Anspruch 1,
**dadurch gekennzeichnet,**
**dass** das mindestens eine Sensorelement (10) als flächiger Dehnungsmessstreifen ausgebildet ist, dessen Widerstandswert sich mit der flächigen Verformung ändert.

4. Vorrichtung nach wenigstens einem der vorhergehenden Ansprüche,
**dadurch gekennzeichnet,**
**dass** sich das mindestens eine Sensorelement (10) im Wesentlichen längs der Laufrichtung des Kraftfahrzeugreifens (11) erstreckt.

5. Vorrichtung nach wenigstens einem der vorhergehenden Ansprüche,
**dadurch gekennzeichnet,**
**dass** sich das mindestens eine Sensorelement (10) über mindestens einen Abschnittsbereich eines Stollens (27) und/oder über mindestens einen Abschnittsbereich einer Rille (28) des Kraftfahrzeugreifens (11) erstreckt.

6. Vorrichtung nach wenigstens einem der vorhergehenden Ansprüche,
**dadurch gekennzeichnet,**
**dass** dem mindestens einen Sensorelement (10) oder einer Gruppe von Sensorelementen (10) eine Übertragungseinheit (20, 21, 22, 23, 29) zugeordnet ist, welche die durch das mindestens eine Sensorelement (10) gemessenen Daten mittelbar oder unmittelbar an die vorzugsweise in dem Kraftfahrzeug angeordnete Steuer- und Auswerteeinheit (24) weiterleitet.

7. Vorrichtung nach wenigstens einem der vorhergehenden Ansprüche,
**dadurch gekennzeichnet,**
**dass** über die Radelektronik (30) noch zusätzliche Daten zu der Steuer- und Auswerteeinheit (24) übertragbar sind, wie beispielsweise Reifendruckdaten, Reifentemperaturdaten, Fahrzeuggeschwindigkeitsdaten, Raddrehzahldaten, Sensorelementdaten, Fahrzeugdaten, Radlastdaten oder dergleichen.

8. Vorrichtung nach wenigstens einem der vorhergehenden Ansprüche,
**dadurch gekennzeichnet,**
**dass** mehrere Sensorelemente (10) in dem Kraftfahrzeugreifen (11) auf einer Umfangslinie längs des Umfangs der Lauffläche (12) des Kraftfahrzeugreifens (11) angeordnet sind.

9. Vorrichtung nach wenigstens einem der vorhergehenden Ansprüche,
**dadurch gekennzeichnet,**
**dass** mehrere Sensorelemente (10) in dem Kraftfahrzeugreifen (11) quer zur Laufrichtung des Kraftfahrzeugreifens (11) angeordnet sind.

10. Verfahren zum Messen der Profiltiefe (16) eines Kraftfahrzeugreifens (11), mit folgenden Verfahrensschritten:
Vorsehen mindestens eines Sensorelementes (10), welches zum Erfassen von Daten hinsichtlich einer Veränderung der Verformungscharakteristik des Kraftfahrzeugreifens (11) im Bereich des Latsches (13) ausgebildet wird;
Anbringen des mindestens einen Sensorelementes (10) im Bereich der der Lauffläche (12) gegenüberliegenden Innenseite des Kraftfahrzeugreifens (11) in stabiler Art und Weise;
Erfassen von Daten hinsichtlich einer Veränderung der Verformungscharakteristik des Kraftfahrzeugreifens (11) im Bereich des Latsches (13) mittels des mindestens einen Sensorelementes (10);
Senden der erfassten Daten an eine mit dem mindestens einen Sensorelement (10) datenverbundenen Steuer- und
Auswerteeinheit (24); und
Weiterverarbeiten der erfassten Daten mittels der Steuer- und Auswerteeinheit (24),
**dadurch gekennzeichnet, dass** zusätzlich zu den erfassten Daten eine reifenindividuelle Kennung mit übertragen wird, um die ermittelte Profiltiefe (16) dem entsprechend zugehörigen Kraftfahrzeugreifen (11) zuzuordnen.

11. Verfahren nach Anspruch 10,
**dadurch gekennzeichnet,**
**dass** mittels des mindestens einen Sensorelementes (10) Veränderungen der Oberflächenkrümmung im Bereich des Latsch-Eingangs bzw. Latsch-Ausgangs, eine Laufzeitänderung der Durchlaufzeit des Latsches (13), der Krümmungsgradient des mindestens einen Sensorelementes (10) und/oder eine Variation von Vibrationen des Kraftfahrzeugreifens (11) detektiert werden.

12. Verfahren nach Anspruch 10 oder 11,
**dadurch gekennzeichnet,**
**dass** Veränderungen der Verformungscharakteristik des Kraftfahrzeugreifens (11) im Bereich des Latsches (13) jeweils in jedem Kraftfahrzeugreifen (11) eines Kraftfahrzeuges kontinuierlich während der Drehung der Kraftfahrzeugreifen (11) erfasst werden und für jeden Kraftfahrzeugreifen (11) separat die Profiltiefe (16) mittels der Steuer- und Auswerteeinheit (24) ermittelt wird.

13. Verfahren nach wenigstens einem der Ansprüche 10 bis 12,
**dadurch gekennzeichnet,**
**dass** die erfassten Daten miteinander verglichen und für beispielsweise eine Plausibilitätsüberprüfung mittels der Steuer- und Auswerteeinheit (24) zusammen ausgewertet werden.

14. Verfahren nach wenigstens einem der Ansprüche 10 bis 13,
**dadurch gekennzeichnet,**
**dass** eine vorgesehene Anzeigeeinheit (25), beispielsweise eine optische, akustische oder haptische Anzeigeeinheit, durch die Steuer- und Auswerteeinheit (24) für eine Anzeige an einen Kraftfahrzeugbenutzer angesteuert wird, für den Fall, dass die erfassten und ausgewerteten Daten ein Erreichen eines vorbestimmten Grenzwertes für die Profiltiefe (16) des jeweiligen Kraftfahrzeugreifens (11) ergeben.

## Claims

1. Device for measuring the tread depth (16) of a motor vehicle tire (11), having:
at least one sensor element (10) which is designed to acquire data relating to a change in the deformation characteristic of the motor vehicle tire (11) in the region of the tire contact area (13) and can be permanently mounted in the region of the inner side of the motor vehicle tire (11) lying opposite the tread (12); and
a control and evaluation unit (24) which has a data connection to the at least one sensor element (10) and has the purpose of further processing the acquired data, **characterized in that** the at least one sensor element (10) is electrically connected to an assigned wheel electronic system (30) by means of which tire identification data can be transmitted to the control and evaluation unit (24).

2. Device according to Claim 1,
**characterized**
**in that** the at least one sensor element (10) is embodied as a planar piezoelement which generates an electrical voltage when planar mechanical deformation occurs.

3. Device according to Claim 1,
**characterized**
**in that** the at least one sensor element (10) is embodied as a planar strain gauge whose resistance value changes with the planar deformation.

4. Device according to at least one of the preceding claims,
**characterized**
**in that** the at least one sensor element (10) extends essentially along the running direction of the motor vehicle tire (11).

5. Device according to at least one of the preceding claims,
**characterized**
**in that** the at least one sensor element (10) extends over at least one section region of a lug (27) and/or over at least one section region of a groove (28) of the motor vehicle tire (11).

6. Device according to at least one of the preceding claims,
**characterized**
**in that** a transmission unit (20, 21, 22, 23, 29) is assigned to the at least one sensor element (10) or to a group of sensor elements (10), which transmission unit indirectly or directly passes on the data measured by the at least one sensor element (10) to the control and evaluation unit (24) which is preferably arranged in the motor vehicle.

7. Device according to at least one of the preceding claims,
**characterized**
**in that** by means of the wheel electronic system (30) additional data can also be transmitted to the control and evaluation unit (24), such as for example tire pressure data, tire temperature data, vehicle speed data, wheel speed data, sensor element data, vehicle data, wheel load data or the like.

8. Device according to at least one of the preceding claims,
**characterized**
**in that** a plurality of sensor elements (10) are arranged in the motor vehicle tire (11) on a circumferential line along the circumference of the tread (12) of the motor vehicle tire (11).

9. Device according to at least one of the preceding claims,
**characterized**
**in that** a plurality of sensor elements (10) in the motor vehicle tire (11) are arranged transversely with respect to the running direction of the motor vehicle tire (11).

10. Method for measuring the tread depth (16) of a motor vehicle tire (11), having the following method steps:
for the provision of at least one sensor element (10) which is designed to acquire data relating to a change in the deformation characteristic of a motor vehicle tire (11) in the region of the tire contact region (13);
mounting of the at least one sensor element (10) in a stable fashion in the region of the inner side of the motor vehicle tire (11) lying opposite the tread (12);
acquisition of data relating to a change in the deformation characteristic of the motor vehicle tire (11) in the region of the tire contact region (13) by means of the at least one sensor element (10);
transmission of the acquired data to a control and evaluation unit (24) which has a data connection to the at least one sensor element (10); and
further processing of the acquired data by means of the control and evaluation unit (24),
**characterized in that** in addition to the acquired data, a tire-specific identifier is also transmitted in order to assign the determined tread depth (16) to the correspondingly associated motor vehicle tire (11).

11. Method according to Claim 10,
**characterized**
**in that** changes in the surface curvature in the region of the tire contact region entry or tire contact region exit, a change in running time of the run-through time of the tire contact region (13), the curvature gradient of the at least one sensor element (10) and/or a variation in vibrations of the motor vehicle tire (11) are detected by means of the at least one sensor element (10).

12. Method according to Claim 10 or 11, **characterized in that** changes in the deformation characteristic of the motor vehicle tire (11) in the region of the tire contact region (13) in each motor vehicle tire (11) of a motor vehicle are respectively detected continuously during the rotation of the motor vehicle tires (11), and the tread depth (16) is determined separately for each motor vehicle tire (11) by means of the control and evaluation unit (24).

13. Method according to at least one of Claims 10 to 12,
**characterized**
**in that** the acquired data are compared with one another and are evaluated together by means of the control and evaluation unit (24) for, for example, plausibility checking.

14. Method according to at least one of Claims 10 to 13,
**characterized**
**in that** a display or indicator unit (25) which is provided, for example an optical, acoustic or haptic display or indicator unit, is actuated by the control and evaluation unit (24) to issue a display or indication to a motor vehicle user, in the event of the acquired and evaluated data revealing that a predetermined limiting value for the tread depth (16) of the respective motor vehicle tire (11) has been reached.

## Revendications

1. Dispositif de mesure de la profondeur de la sculpture (16) d'un pneu de véhicule à moteur (11), avec:
au moins un élément formant capteur (10) conçu pour saisir des données concernant une modification de la caractéristique de déformation du pneu de véhicule à moteur (11) dans la région d'aplatissement (13) et qui peut être placé de façon fixe dans la région du côté intérieur, opposé à la bande de roulement (12), du pneu de véhicule à moteur (11) ; et
une unité de commande et d'analyse (24) présentant une liaison de données avec le au moins un élément formant capteur (10), pour poursuivre le traitement des données saisies,
**caractérisé en ce que** le au moins un élément formant capteur (10) est électriquement relié à une électronique de roue (30) correspondante, grâce à laquelle les données d'identification du pneu peuvent être transmises à l'unité de commande et d'analyse (24).

2. Dispositif selon la revendication 1, **caractérisé en ce que** le au moins un élément formant capteur (10) est conçu comme un élément piézo-électrique plat qui génère une tension électrique en cas de déformation mécanique plane.

3. Dispositif selon la revendication 1, **caractérisé en ce que** le au moins un élément formant capteur (10) est conçu comme une jauge extensométrique plane dont la valeur de résistance varie avec la déformation varie avec la déformation plane.

4. Dispositif selon au moins l'une des revendications précédentes, **caractérisé en ce que** le au moins un élément formant capteur (10) s'étend principalement le long du sens de déplacement du pneu de véhicule à moteur (11).

5. Dispositif selon au moins l'une des revendications précédentes, **caractérisé en ce que** le au moins un élément formant capteur (10) s'étend sur au moins une zone partielle d'une côte (27) et/ou sur au moins une zone partielle d'une rainure (28) du pneu de véhicule à moteur (11).

6. Dispositif selon au moins l'une des revendications précédentes, **caractérisé en ce que**, au au moins un élément formant capteur (10) ou à un groupe d'éléments formant capteurs (10) correspond une unité de transmission (20, 21, 22, 23, 29) qui transfère les données mesurées par le au moins un élément formant capteur (10) immédiatement ou non immédiatement à l'unité de commande et d'analyse (24), agencée de préférence dans le véhicule à moteur.

7. Dispositif selon au moins l'une des revendications précédentes, **caractérisé en ce que** des données supplémentaires peuvent être également transmises à l'unité de commande et d'analyse (24) via l'électronique de roue (30), comme par exemple des données relatives à la pression des pneus, des données relatives à la température des pneus, des données relatives à la vitesse du véhicule à moteur, des données relatives à la vitesse de rotation des roues, des données relatives aux éléments formant capteurs, des données relatives au véhicule à moteur, des données relatives à la charge sur roues, ou équivalent.

8. Dispositif selon au moins l'une des revendications précédentes, **caractérisé en ce que** plusieurs éléments formant capteurs (10) sont agencés dans le pneu du véhicule à moteur (11) sur une ligne périphérique le long de la périphérie de la bande de roulement (12) du pneu du véhicule à moteur (11).

9. Dispositif selon au moins l'une des revendications précédentes, **caractérisé en ce que** plusieurs éléments formant capteurs (10) sont agencés dans le pneu du véhicule à moteur (11) transversalement par rapport au sens de déplacement du pneu de véhicule à moteur (11).

10. Procédé de mesure de la profondeur de la sculpture (16) d'un pneu de véhicule à moteur (11), comprenant les étapes suivantes:
- installation d'au moins un élément formant capteur (10) conçu pour saisir des données concernant une modification de la caractéristique de déformation du pneu de véhicule à moteur (11) dans la région d'aplatissement (13)
- mise en place de manière stable du moins un élément formant capteur (10) dans la région du côté intérieur, opposé à la bande de roulement (12), du pneu de véhicule à moteur (11) ;
- saisie de données concernant une modification de la caractéristique de déformation du pneu de véhicule à moteur (11) dans la région d'aplatissement (13) à l'aide du au moins un élément formant capteur (10) ;
- envoi des données saisies à une unité de commande et d'analyse (24) présentant une liaison de données avec le au moins un élément formant capteur (10) ; et
- poursuite du traitement des données saisies à l'aide de l'unité de commande et d'analyse (24) ;
**caractérisé en ce que**, en plus des données saisies, une identification individuelle du pneu est également transmise, afin d'attribuer la profondeur de la sculpture (16) déterminée au pneu de véhicule à moteur (11) correspondant.

11. Procédé selon la revendication 10, **caractérisé en ce que**, à l'aide du au moins un élément formant capteur (10) sont détectés des modifications de la courbure superficielle dans la région de l'entrée de l'aplatissement ou de la sortie de l'aplatissement, une modification du temps de passage de l'aplatissement (13), le gradient de courbure du au moins un élément formant capteur (10) et/ou une variation des vibrations du pneu de véhicule à moteur (11).

12. Procédé selon la revendication 10 ou 11, **caractérisé en ce que** les modifications de la caractéristique de déformation du pneu de véhicule à moteur (11) dans la région de l'aplatissement (13) sont respectivement saisies en continu dans chaque pneu d'un véhicule à moteur (11) pendant la rotation des pneus du véhicule à moteur (11) et la profondeur de la sculpture (16) est déterminée séparément pour chaque pneu de véhicule à moteur (11) à l'aide de l'unité de commande et d'analyse (24).

13. Procédé selon au moins l'une des revendications 10 à 12, **caractérisé en ce que** les données saisies sont comparées entre elles et analysées à l'aide de l'unité de commande et d'analyse (24) pour par exemple une vérification de plausibilité.

14. Procédé selon au moins l'une des revendications 10 à 13, **caractérisé en ce qu'**une unité de signalisation (25), par exemple une unité de signalisation optique, acoustique ou haptique, est commandée par l'unité de commande et d'analyse (24) pour une signalisation à l'attention d'un utilisateur du véhicule à moteur, pour le cas où les données saisies et analysées indiquent qu'une valeur limite prédéterminée pour la profondeur de la sculpture (16) du pneu de véhicule à moteur (11) respectif a été atteinte.
